# FASCICULE DE BREVET EUROPEEN

(11) **EP 0 927 298 B1**
(45) Date de publication et mention de la délivrance du brevet: **30.10.2002**
(21) Numéro de dépôt: 97919112.9
(22) Date de dépôt: 17.09.1997
(51) Int. Cl.: F02D 21/08, F02D 41/22

(54) **SYSTEME D'ALIMENTATION EN AIR D'UN MOTEUR A COMBUSTION INTERNE**
LUFTZUFUHRSYSTEM FÜR BRENNKRAFTMASCHINE
AIR SUPPLY SYSTEM FOR AN INTERNAL COMBUSTION ENGINE

(30) Priorité: 17.09.1996 FR 9611306
(43) Date de publication de la demande: 07.07.1999
(73) Titulaire: Renault s.a.s., 92100 Boulogne Billancourt (FR)
(72) Inventeur: DUBOS, Gilles, F-78000 Versailles (FR); ZUBER, Marc, F-91220 Brétigny S/Orge (FR)
(74) Mandataire: Srour, Elie
(86) Numéro de dépôt international: FR9701637
(87) Numéro de publication internationale: WO98012428

(56) Documents cités:
- FR-A- 2 441 727
- GB-A- 2 279 769
- US-A- 4 359 991
- PATENT ABSTRACTS OF JAPAN vol. 015, no. 146 (M-1102), 12 avril 1991 & JP 03 023356 A (HONDA MOTOR CO LTD), 31 janvier 1991,

## Description

La présente invention concerne les systèmes d'alimentation en air d'un moteur à combustion interne, et les procédés de régulation du débit de recirculation d'un système d'alimentation en air d'un moteur à combustion interne, notamment d'un moteur diesel (voir par exemple GB-A-2 279 769).

On connaît un système d'alimentation en air d'un moteur à combustion comprenant un conduit d'admission d'air mettant l'atmosphère en communication avec le collecteur d'admission du moteur, un conduit d'échappement mettant l'atmosphère en communication avec le collecteur d'échappement du moteur, un conduit de dérivation reliant le conduit d'admission au conduit d'échappement en contournant le moteur, un débitmètre monté dans le conduit d'admission en amont du point où le conduit de dérivation débouche dans le conduit d'admission, une vanne réglable montée dans le conduit de dérivation et un régulateur régulant l'ouverture de la vanne en fonction de la comparaison entre le débit mesuré par le débitmètre et un débit de consigne.

Le débitmètre est destiné à mesurer le débit de recirculation. Cependant il a été placé dans le conduit d'admission et pas dans le conduit de dérivation car, dans ce dernier, il s'encrasserait. De plus, des gaz chauds passant dans ce conduit, et le débitmètre étant sensible aux hautes températures, il donnerait des mesures erronées.

Placer le débitmètre dans le conduit d'admission supprime l'encrassement et l'exposition aux hautes températures, mais a d'autres inconvénients. Pour de petits débits de recirculation, le débit d'admission est, de manière correspondante, grand et une erreur de mesure de ce débit, acceptable en % pour ce grand débit d'admission, devient trop grande en %, vis-à-vis du débit de recirculation.

En outre, la mesure du débit ayant lieu à distance de la vanne commandée par ce débit, qui elle se trouve dans le conduit de dérivation, il s'ensuit une grande inertie de la mesure du débit passant réellement dans le conduit de dérivation. Ainsi, une fermeture totale de la vanne (plus de dérivation) n'apparaît sur le débitmètre, qui indique alors que le débit d'admission est égal au débit total, qu'environ une seconde plus tard.

Dans d'autres systèmes antérieurs, on a remplacé le débitmètre par un dispositif de mesure d'ouverture de la vanne, disposé à proximité de cette vanne, dans le conduit de dérivation. Cependant cet agencement est sensible à la température (dilatation) et à l'encrassement, ce qui entraîne des erreurs de mesure.

L'invention vise un système d'alimentation en air d'un moteur à combustion interne qui, tout en n'exposant pas le débitmètre aux gaz chauds et pollués, donne une régulation fiable même à des débits de recirculation petits et a peu d'inertie.

Suivant l'invention, il est prévu, dans le système d'alimentation en air, un dispositif de mesure d'ouverture de la vanne et un régulateur supplémentaire régulant l'ouverture de la vanne en fonction de la comparaison entre l'ouverture mesurée et une ouverture de consigne, ainsi que des moyens destinés à asservir l'un des deux régulateurs à l'autre ou à l'en affranchir.

En prévoyant ainsi une régulation supplémentaire de l'ouverture de vanne par un dispositif de mesure de l'ouverture de vanne placé à proximité de la vanne dans le conduit de dérivation, on peut rendre le système fiable aux petits débits de recirculation ou lorsque l'alimentation en air se fait de manière trop pulsée tout en conservant le débitmètre à l'abri des gaz chauds et pollués et avec peu d'inertie..

A cet effet, il est avantageusement prévu un dispositif automate d'asservissement/affranchissement, qui permet d'affranchir le régulateur, qui régule en fonction de la mesure du dispositif de mesure d'ouverture de la vanne, à l'autre régulateur et d'effectuer la régulation uniquement par ce régulateur (affranchissement) ou de retenir à une régulation par le régulateur régulant en fonction du débit mesuré par le débitmètre (asservissement).

On améliore la fiabilité de la régulation si, pour des débits de dérivation trop petits, la régulation est effectuée par le régulateur opérant à partir de la mesure de l'ouverture de vanne.

Suivant l'invention, il est également proposé un procédé de régulation du débit de recirculation d'un système d'alimentation en air, qui consiste à effectuer une régulation de l'ouverture de vanne en fonction de la comparaison entre le débit mesuré par le débitmètre et un débit de consigne et caractérisé en ce qu'il consiste à effectuer une régulation supplémentaire de l'ouverture de vanne par une comparaison entre une mesure d'ouverture fournie par un dispositif de mesure d'ouverture de la vanne et une ouverture de consigne et à rendre l'une des régulations esclave de l'autre.

Un perfectionnement de ce procédé consiste à rendre la régulation supplémentaire par la mesure de l'ouverture esclave de la première régulation par la mesure du débit.

Un perfectionnement de ce procédé consiste à prévoir la possibilité d'affranchir la régulation supplémentaire de la première de sorte que l'ouverture de vanne ne soit plus régulée que par la régulation par la mesure de l'ouverture.

Un mode de réalisation de l'invention, donné uniquement à titre d'exemple, est décrit en se reportant aux dessins, dans lesquels :
la Figure 1 est un schéma représentant un système d'admission suivant l'invention et
la Figure 2 est un schéma synoptique de la régulation du
système d'alimentation de la figure 1.

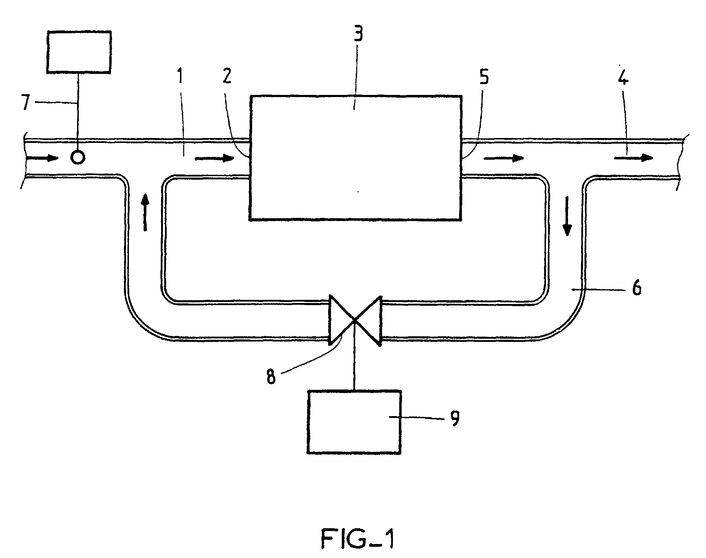

A la Figure 1, un conduit 1 d'admission alimente le collecteur 2 d'admission d'un moteur 3 en air frais. Un conduit 4 d'échappement met a le collecteur 5 d'échappement du moteur 3 en communication avec l'atmosphère. Un conduit 6 de dérivation relie le conduit 4 d'échappement au conduit 1 d'admission, en contournant le moteur 3. Un débitmètre 7 est monté de manière à mesurer le débit dans le conduit 1 d'admission en amont de l'endroit où le conduit 6 de dérivation débouche dans le conduit 1 d'admission. Une vanne 8 d'ouverture réglable est montée dans le conduit 6 de dérivation et l'ouverture de cette vanne permet de commander le débit de dérivation renvoyé du collecteur 5 d'échappement au collecteur 2 d'admission. Un dispositif 9 de mesure de l'ouverture de la vanne 8 est prévu. Ce dispositif 9 fournit une mesure de l'aire d'ouverture de la vanne en mesurant l'avancée d'un pointeau directement fonction de l'aire d'ouverture de la vanne.

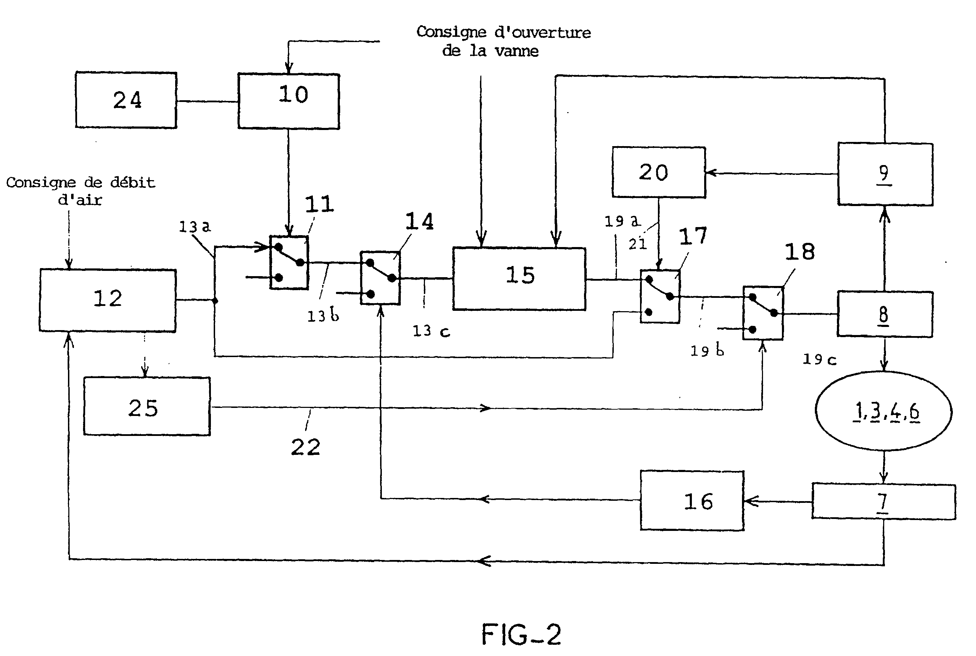

En se reportant à la figure 2, l'algorithme du système comporte un automate 10 et un interrupteur 11, l'interrupteur 11 comportant deux bornes d'entrée et une borne de sortie. A l'état passant, qui est représenté au dessin, la borne de sortie de l'interrupteur 11 est reliée à la borne d'entrée qui est reliée à un premier régulateur 12 par une ligne 13a. Lorsque l'interrupteur est fermé, la borne de sortie est reliée à l'autre borne d'entrée de l'interrupteur, (court-circuit).

Le passage de l'état passant à l'état fermé de l'interrupteur 11 et réciproquement est commandé par l'automate 10.

Le système comprend, en outre, un interrupteur 14 qui est également représenté au dessin à l'état passant. Sa borne de sortie est reliée à un régulateur 15 supplémentaire par la ligne 13C et une de ses bornes d'entrée à la borne de sortie de l'interrupteur 11 par une ligne 13b. Les lignes 13a, 13b et 13c permettent au régulateur 12 de commander le régulateur 15, la consigne du régulateur 15 étant égale à la somme d'une consigne propre d'ouverture de vanne et de la sortie du régulateur-maître 12.

L'interrupteur 14 est également relié à un dispositif 16 qui, par l'intermédiaire d'une ligne de commande analogue aux précédentes, commande le passage de l'interrupteur 14 de l'état passant à l'état fermé.

Le système comprend en outre un interrupteur 17 relié par sa borne de sortie à une borne d'entrée d'un interrupteur 18, tandis qu'une de ses bornes d'entrée est reliée au régulateur 15 par une ligne 19a et son autre borne d'entrée au régulateur 12. L'interrupteur 17 est représenté à l'état dans lequel il relie le régulateur 15 à l'interrupteur 18. Dans son autre état, il relie le régulateur 12 à l'interrupteur 18. Le passage d'un état à l'autre est commandé par le dispositif 20, par l'intermédiaire de la ligne 21 reliant le dispositif 20 à l'interrupteur 17.

Enfin, l'interrupteur 18 est relié par sa borne de sortie à la vanne 8, tandis que l'une de ses bornes d'entrée est reliée à la borne de sortie de l'interrupteur 17 et l'autre de ses bornes d'entrée à une borne d'entrée de court-circuit. Le passage de l'état passant (représenté au dessin,) à l'état fermé (borne d'entrée de court-circuit reliée à la borne de sortie) est commandé, par l'intermédiaire d'une ligne 22, par un dispositif 25.

Le dispositif 9 de mesure de l'ouverture de la vanne mesure l'ouverture de la vanne et la transmet au régulateur 15 (régulateur PID ou analogue), qui par comparaison avec une consigne d'ouverture de la vanne régule la vanne 8 par l'intermédiaire d'une ligne 19a, 19b, 19c.

Le dispositif 20 de détection d'anomalie est relié au dispositif 9 de mesure et interrompt la ligne 19a,b,c de régulation par l'intermédiaire d'un interrupteur 17 s'il détecte une anomalie de la mesure, notamment lorsque la mesure de l'ouverture s'écarte d'une gamme de valeur admissible prédéterminée. Cette gamme dépend du type de vanne et correspond à la plage dans laquelle les mesures sont considérées comme fiables et correspondent à un fonctionnement normal de la vanne.

Le débitmètre 7 fournit au régulateur 12 une mesure du débit d'air que ce régulateur 12 (de type PID ou analogue) compare à une consigne de débit d'air provenant du système électronique du moteur.

Ce régulateur 12, régule en fonction de cette comparaison, le régulateur 15 suivant une régulation maître-esclave. Cela signifie que le régulateur 15 esclave régule l'ouverture de la vanne suivant les valeurs que lui indique le régulateur 12 maître, ces valeurs étant calculées par le régulateur 12 en fonction deu débit de consigne et du débit mesuré par le débitmètre. La liaison de régulation maître-esclave du régulateur 15 par le régulateur 12 se fait par l'intermédiaire d'une ligne 13a,b,c.

L'automate 10 d'asservissement/affranchissement commande, en fonction de la valeur de consigne de l'ouverture de vanne l'interruption de la liaison 13a,b,c par l'intermédiaire de l'interrupteur 11.

Ainsi lorsque la consigne de l'ouverture de vanne est inférieure à une valeur de seuil, qui dépend des dimensions des conduits et des vannes, et pour laquelle on sait que les mesures de débit ne seront pas fiables, le régulateur 15 est affranchi du régulateur 12 et régule seul l'ouverture de la vanne 8.

Un dispositif 24 de pulsion indique également à l'automate 10 que de l'air pulsé à une fréquence supérieure à une fréquence de seuil est admis dans le conduit d'admission, et l'automate 10 interrompt également la ligne 13a,b,c en réponse à cette information, la mesure par débit d'air étant trop imprécise pour de l'air pulsé au-delà d'une certaine fréquence, qui dépend des dimensions des conduits et des débits.

Le dispositif 16 de détection d'un mauvais fonctionnement surveille le débit mesuré par le débitmètre 7 et lorsque ce débit sort d'une plage admissible prédéterminée, en dehors de laquelle les mesures du débitmètre ne sont pas fiables et correspondent à des fonctionnements anormaux du système, ce dispositif 16 commande l'interrupteur 14 qui interrompt la liaison entre les deux régulateurs et laisse le régulateur 15 réguler seul l'ouverture de la vanne 8.

Enfin, un dispositif 25 de détection d'erreur de cohérence entre les régulateurs 12 et 15 interrompt la ligne 19a,b,c et donc toute régulation, par l'intermédiaire de l'interrupteur 18, lorsque la différence entre les deux mesures d'ouverture, l'une directe, l'autre déduite du débit, présente une différence supérieure à une valeur de seuil, préréglée par le fabricant. Dans ce cas, la régulation cesse et l'automobiliste peut en être averti par exemple par un voyant lumineux.

## Revendications

1. Système d'alimentation en air d'un moteur à combustion interne, comprenant un conduit (1) d'admission d'air mettant l'atmosphère en communication avec le collecteur (2) d'admission du moteur, un conduit (4) d'échappement mettant l'atmosphère en communication avec le collecteur (5) d'échappement du moteur, un conduit (6) de dérivation reliant le conduit (1) d'admission au conduit (4) d'échappement en contournant le moteur, un débitmètre (7) monté dans le conduit (1) d'admission en amont du point où le conduit (6) de dérivation débouche dans le conduit (1). d'admission, et une vanne (8) réglable montée dans le conduit (6) de dérivation, un premier régulateur (12), régulant l'ouverture de la vanne en fonction de la comparaison entre le débit mesuré par le débitmètre (7) et un débit de consigne, **caractérisé par** un dispositif (9) de mesure d'ouverture de la vanne, par un régulateur (15) supplémentaire régulant l'ouverture de la vanne (8) en fonction de la comparaison entre l'ouverture mesurée et une ouverture de consigne et par des moyens destinés à asservir l'un des deux régulateurs (12,15) à l'autre ou à l'en affranchir.

2. Système d'alimentation suivant la revendication 1, **caractérisé en ce que** le régulateur (15) supplémentaire est esclave du premier régulateur (12).

3. Système suivant la revendication 2, **caractérisé par** un automate (10) d'asservissement/affranchissement qui permet d'affranchir le régulateur (15) supplémentaire du premier régulateur (12) (affranchissement) ou de retourner à une régulation par le premier régulateur (15) (asservissement).

4. Système suivant la revendication 3, **caractérisé en ce que** l'automate (10) d'asservissement/affranchissement affranchit le régulateur (15) supplémentaire lorsque l'ouverture de vanne mesurée par le dispositif (9) est inférieure à une valeur de seuil prédéterminée, ou lorsque l'air d'admission est de l'air pulsé suivant une fréquence supérieure à une fréquence de seuil.

5. Système suivant l'une des revendications précédentes, **caractérisé par** un dispositif (25) de détection d'erreur de cohérence entre les régulateurs (12,15) qui commande la désactivation des deux régulateurs (12,15).

6. Système suivant l'une des revendications précédentes, **caractérisé par** un dispositif (20) de détection d'anomalie qui commande la désactivation du régulateur (15) supplémentaire.

7. Système suivant l'une des revendications précédentes, **caractérisé par** un dispositif de détection de mauvais fonctionnement (16) qui commande la désactivation du régulateur (15).

8. Procédé de régulation du débit de recirculation d'un système d'alimentation en air comportant un conduit (1) d'admission d'air mettant l'atmosphère en communication avec le collecteur (2) d'admission du moteur, un conduit (4) d'échappement mettant l'atmosphère en communication avec le collecteur (5) d'échappement du moteur, un conduit (6) de dérivation reliant le conduit (1) d'admission au conduit (4) d'échappement en contournant le moteur, un débitmètre (7) monté dans le conduit (1) d'admission en amont du point où le conduit (6) de dérivation débouche dans le conduit (1) d'admission, et une vanne (8) réglable montée dans le conduit (6) de dérivation qui consiste à effectuer une régulation de l'ouverture de vanne en fonction de la comparaison entre le débit mesuré par le débitmètre et un débit de consigne, **caractérisé en ce qu'**il consiste également à effectuer une régulation supplémentaire de l'ouverture de vanne par une comparaison entre une mesure d'ouverture fournie par un dispositif de mesure d'ouverture de la vanne et une ouverture de consigne et à rendre l'une des régulations esclave de l'autre.

9. Procédé de régulation suivant la revendication 8 qui consiste à rendre la régulation supplémentaire par la mesure de l'ouverture esclave de la première régulation par la mesure du débit.

10. Procédé suivant la revendication 9 **caractérisé en ce qu'**il consiste à prévoir la possibilité d'affranchir la régulation supplémentaire de la première de sorte que l'ouverture de vanne ne soit plus régulée que par la régulation par la mesure de l'ouverture.

## Patentansprüche

1. Anordnung zur Versorgung eines Verbrennungsmotors mit Luft, die eine Lufteinlassleitung (1) aufweist, die die Atmosphäre mit dem Einlasskrümmer (2) des Motors verbindet, eine Abgasleitung (4) aufweist, die die Atmosphäre mit dem Abgaskrümmer (5) des Motors verbindet, eine Abzweigleitung (6) aufweist, die die Einlassleitung mit der Abgasleitung unter Umgehung des Motors verbindet, einen Mengenmesser (7) aufweist, der in der Einlassleitung (1) stromaufwärts der Stelle angeordnet ist, an der die Abzweigleitung (6) in der Einlassleitung (1) mündet, ein steuerbares Ventil (8) aufweist, das in die Abzweigleitung (6) eingesetzt ist und einen ersten Regler (12) aufweist, der die Öffnung des Ventils (8) als Funktion eines Vergleichs zwischen der vom Mengenmesser (7) gemessenen Menge und einem Sollwert der Menge steuert, **gekennzeichnet durch** eine Vorrichtung (9) zur Messung der Öffnung des Ventils, **durch** einen zusätzlichen Regler (15), der die Öffnung des Ventils (8) steuert als Funktion eines Vergleichs zwischen der gemessenen Öffnung und einem Sollwert der Öffnung und **durch** eine Vorrichtung um einen der beiden Regler (12,15) dem anderen unterzuordnen oder um ihn von ihm zu befreien.

2. Anordnung zur Versorgung nach Anspruch 1, **dadurch gekennzeichnet, dass** der zusätzliche Regler (15) dem ersten Regler (12) untergeordnet ist.

3. Anordnung nach Anspruch 1, **dadurch gekennzeichnet, dass** sie einen Automaten (10) zur Unterordnung/Freigabe aufweist, der die Freigabe des zusätzlichen Reglers (15) vom ersten Regler (12) ermöglicht (Freigabe) oder eine Rückkehr zur Regelung durch den ersten Regler (12) ermöglicht (Unterordnung).

4. Anordnung nach Anspruch 3, **dadurch gekennzeichnet, dass** der Automat (10) zur Unterordnung/Freigabe den zusätzlichen Regler (15) freigibt wenn die von der Vorrichtung (9) gemessene Öffnung des Ventils kleiner als ein vorgegebener Schwellwert ist oder wenn die Einlassluft pulsiert mit einer Frequenz, die grösser ist als eine Grenzfrequenz.

5. Anordnung nach einem der vorhergehenden Ansprüche, **gekennzeichnet durch** eine Vorrichtung (25) zur Feststellung von Kohärenzfehlern zwischen den Reglern (12,15), die eine Deaktivierung der beiden Regler (12,15) steuert.

6. Anordnung nach einem der vorhergehenden Ansprüche, **gekennzeichnet durch** eine Vorrichtung (20) zur Feststellung von Anomalien, die die Deaktivierung des zusätzlichen Reglers (15) steuert.

7. Anordnung nach einem der vorhergehenden Ansprüche, **gekennzeichnet durch** eine Vorrichtung (16) zur Feststellung eines Fehlbetriebs, die die Deaktivierung des Reglers (15) steuert.

8. Verfahren zur Steuerung der Rückführungsmenge einer Anordnung zur Versorgung mit Luft, die eine Lufteinlassleitung (1) aufweist, die die Atmosphäre mit dem Einlasskrümmer (2) des Motors verbindet, eine Abgasleitung (4) aufweist, die die Atmospähre mit dem Abgaskrümmer (5) des Motors verbindet, eine Abzweigleitung (6) aufweist, die die Einlassleitung (1) mit der Abgasleitung (4) unter Umgehung des Motors verbindet, einen Mengenmesser (7) aufweist, der in der Einlassleitung (1) stromaufwärts der Stelle angeordnet ist, an der die Abzweigleitung (6) in der Einlassleitung (1) mündet und ein steuerbares Ventil (8) aufweist, das in die Abzweigleitung (6) eingesetzt ist, wobei es darin besteht, eine Steuerung der Öffnung des Ventils durchzuführen als Funktion eines Vergleichs zwischen der vom Mengenmesser gemessenen Menge und einem Sollwert der Menge, **dadurch gekennzeichnet, dass** es ausserdem darin besteht, eine zusätzliche Steuerung der Öffnung des Ventils durchzuführen mittels eines Vergleichs zwischen einer Messung der Öffnung, die von einer Vorrichtung zur Messung der Öffnung des Ventils stammt und einem Sollwert der Öffnung und dass eine dieser Steuerungen der anderen untergeordnet wird.

9. Verfahren zur Steuerung nach Anspruch 8, das darin besteht, dass die zusätzliche Steuerung durch die Messung der Öffnung der ersten Steuerung durch die Messung der Menge untergeordnet wird.

10. Verfahren nach Anspruch 9, **dadurch gekennzeichnet, dass** es darin besteht, die Möglichkeit vorzusehen, die zusätzliche Steuerung von der ersten zu befreien, sodass die Öffnung des Ventils nur durch die Steuerung auf grund der Messung der Öffnung durchgeführt wird.

## Claims

1. A system for supplying an internal combustion engine with air, comprising an air intake conduit (1) communicating the atmosphere with the intake manifold (2) of the engine, an exhaust conduit (4) communicating the atmosphere with the exhaust manifold (5) of the engine, a by-pass conduit (6) connecting the intake conduit (1) to the exhaust conduit (4) by by-passing the engine, a flowmeter (7) fitted in the intake conduit (1) upstream of the point at which the by-pass conduit (6) connects to the intake conduit (1), and a regulatable valve (8) fitted in the by-pass conduit (6), a first regulator (12) regulating opening of the valve in dependence on a comparison between the flow measured by the flowmeter (7) and a reference flow, **characterised by** a device (9) for measuring opening of the valve, an additional regulator (15) for regulating opening of the valve (8) in dependence on a comparison between the measured opening and a reference opening, and means intended to subject one of the two regulators (12, 15) to the other or to liberate it therefrom.

2. A system according to claim 1 **characterised in that** the additional regulator (15) is the slave of the first regulator (12).

3. A system according to claim 2 **characterised by** an automatic subjectlon/liberation device (10) which makes it possible to liberate the additional regulator (15) from the first regulator (12) (liberation) or to return to regulation by the first regulator (15) (subjection).

4. A system according to claim 3 **characterised in that** the automatic subjection/liberation device (10) liberates the additional regulator (15) when the valve opening as measured by the device (9) is less than a predetermined threshold value or when the intake air is air pulsed at a frequency higher than a threshold frequency.

5. A system according to one of the preceding claims **characterised by** a device (25) for coherence error detection between the regulators (12, 15), which controls deactivation of the two regulators (12, 15).

6. A system according to one of the preceding claims **characterised by** an anomaly detection device (20) which controls deactivation of the additional regulator (15).

7. A system according to one of the preceding claims **characterised by** a malfunction detection device (16) which controls deactivation of the regulator (15).

8. A process for regulating the recirculation flow of an air supply system comprising an air intake conduit (1) communicating the atmosphere with the intake manifold (2) of the engine, an exhaust conduit (4) communicating the atmosphere with the exhaust manifold (5) of the engine, a by-pass conduit (6) connecting the intake conduit (1) to the exhaust conduit (4) by by-passing the engine, a flowmeter (7) fitted in the intake conduit (1) upstream of the point at which the by-pass conduit (6) connects to the intake conduit (1), and a regulatable valve (8) fitted in the by-pass conduit (6), which comprises effecting regulation of opening of the valve in dependence on a comparison between the flow measured by the flowmeter and a reference flow, **characterised in that** it also comprises effecting additional regulation of the opening of the valve by a comparison between an opening measurement provided by a valve opening measurement device and a reference opening and making one of the regulations the slave of the other.

9. A regulating process according to claim 8 which comprises making the additional regulation by measurement of the valve opening the slave of the first regulation by measurement of the flow.

10. A process according to claim 9 **characterised in that** it comprises providing the possibility of liberating the additional regulation from the first regulation in such a way that the valve opening is then regulated only by regulation by measurement of the valve opening.
